# NEUE EUROPÄISCHE PATENTSCHRIFT

(11) **EP 2 274 369 B2**
(45) Veröffentlichungstag und Bekanntmachung des Hinweises auf die Entscheidung über den Einspruch: **29.03.2023**
(45) Hinweis auf die Patenterteilung: 02.12.2015
(21) Anmeldenummer: 09738211.3
(22) Anmeldetag: 30.04.2009
(51) Int. Cl.: C08J 9/00

(54) **PS-SCHAUMSTOFFE MIT GERINGEM METALLGEHALT**
POLYSTYRENE FOAMS WITH LOW AMOUNT OF METAL
MOUSSES DE POLYSTYRENE AVEC UNE FAIBLE TENEUR EN MÉTAL

(30) Priorität: 02.05.2008 EP 08155586
(43) Veröffentlichungstag der Anmeldung: 19.01.2011
(73) Patentinhaber: BASF SE, 67056 Ludwigshafen am Rhein (DE)
(72) Erfinder: BRAUN, Frank, 67063 Ludwigshafen (DE); BELLIN, Ingo, 68159 Mannheim (DE); HAHN, Klaus, 67281 Kirchheim (DE)
(74) Vertreter: Féaux de Lacroix, Stefan
(86) Internationale Anmeldenummer: PCT/EP2009/055250
(87) Internationale Veröffentlichungsnummer: WO 2009/133167

(56) Entgegenhaltungen:
- EP-A2- 0 915 127
- WO-A1-97/45477
- WO-A2-2006/108672
- DE-A1- 19 828 250
- US-A1- 2004 039 073
- US-A1- 2006 276 557

## Beschreibung

Die vorliegende Erfindung betrifft ein expandierbares Styrolpolymerisat (EPS), enthaltend wenigstens ein Flammschutzmittel als Komponente (A), 0,01 bis 0,8 Gew.-%, bezogen auf Komponente (A), wenigstens eines Metalls als Komponente (B) und athermane Partikel als Komponente (C), wobei die athermanen Partikel Graphit sind, ein Verfahren zur Herstellung dieses expandierbaren Styrolpolymerisates, einen expandierten Styrolpolymerisat-Partikel, enthaltend wenigstens ein Flammschutzmittel als Komponente (A), 0,01 bis 0,8 Gew.-%, bezogen auf Komponente (A), wenigstens eines Metalls als Komponente (B) und athermane Partikel als Komponente (C), wobei die athermanen Partikel Graphit sind, ein Verfahren zur Herstellung dieses expandierten Styrolpolymerisat-Partikels, einen Schaumstoff, herstellbar aus dem expandierbaren Styrolpolymerisat, ein Verfahren zur Herstellung dieses Schaumstoffes und die Verwendung dieses Schaumstoffes zur thermischen Isolierung von Maschinen und Haushaltsgeräten und als Verpackungsmaterial.

Expandierbare Styrolpolymerisate, enthaltend wenigstens ein Flammschutzmittel, sind aus dem Stand der Technik bereits bekannt.

JP 2005-00 22 68 A1 offenbart einen auf Styrol basierenden Schaumstoff, der als athermane Partikel Graphitpulver enthält. Der Schaumstoff hat eine Dichte von 10 bis 100 kg/m² und einen durchschnittlichen Zellradius von 20 µm bis 1000 µm.

WO 2004/087798 A1 offenbart ein expandierbares vinylaromatisches Polymer und ein Verfahren zu dessen Herstellung. Das Polymer gemäß der genannten Schrift enthält eine Matrix basierend auf vinylaromatischen Monomeren, 1 bis 10 Gew.-% eines Treibmittels und 0,01 bis 20 Gew.-%, bezüglich des Polymers, Ruß als athermane Partikel.

EP 0 981 575 B1 offenbart ein Verfahren zur Herstellung von Graphit-Partikel enthaltenden, expandierbaren Styrolpolymerisaten durch Polymerisation von Styrol in wässriger Suspension in Gegenwart von Graphitpartikeln.

WO 97/45477 A1 offenbart Russpartikel enthaltende expandierbare Styrolpolymerisate. Die Russpartikel liegen in einer Menge von 0,05 bis 25 Gew.-% in homogener Verteilung vor. Die Styrolpolymerisate können übliche und bekannte Hilfsmittel und Zusatzstoffe enthalten, beispielsweise Flammschutzmittel, Keimbildner, UV-Stabilisatoren, Kettenüberträger, Treibmittel, Weichmacher, Pigmente und Antioxidantien. Die Polymerisate enthalten auch Flammschutzmittel, insbesondere solche auf Basis organischer Bromverbindungen.

US 2006/276557 A1 offenbart expandierbare vinylaromatische Polymere und ein Verfahren zu ihrer Herstellung. Die Polymere enthalten 0,01 bis 20 Gew.-% Russ, welcher homogen in der Polymermatrix verteilt ist, mit einem durchschnittlichen Durchmesser von 30 bis 2000 nm, einer Oberfläche von 5 bis 40 m²/g, einem Schwefelgehalt von 0,1 bis 1000 ppm und einem Aschegehalt von 0,001 bis 1 %. Die Polymere können auch übliche Additive, beispielsweise Pigmente, Stabilisatoren, Flammschutzmittel, antistatische Reagenzien, Antihaftmittel usw. enthalten.

EP 0 915 127 A2 offenbart expandierte Styrolpolymerisate, die athermane Partikel in homogener Verteilung und ein Hydrophobierungsmittel als Beschichtung enthalten. Geeignete Hydrophobierungsmittel sind Carboxylate von Aluminium, Zirkonium und Hafnium in Form von wässrigen Lösungen.

US 2004/039073 A1 offenbart expandierbare Styrolpolymere, die Kohlenstoffpartikel enthalten. Als Treibmittel enthalten die Styrolpolymere 2,2 bis 6 Gew.-% Pentan und 1 bis 10 Gew.-% Wasser. Die Styrolpolymere können ebenfalls übliche Additive wie Flammschutzmittel, Nukleierungsmittel, UV-Stabilisatoren und Antioxidantien enthalten.

DE 198 28 250 A1 offenbart Polystyrol-Schaumstoffkugeln für Drainage-Platten. Diese können Graphit als athermane Partikel enthalten.

Nachteilig an den Verfahren des Standes der Technik bzw. an den bekannten expandierbaren Styrolpolymerisaten ist, dass das Vorliegen von Metallen vielfach einen Einfluss auf die Herstellung und damit auf die Eigenschaften der Polystyrol-Schaumstoffe hat. Beispielsweise hängt bei der radikalischen Polymerisation in Suspension der Reaktionsverlauf vom Metallgehalt der Reaktionslösung ab. Des Weiteren ist es bei der Herstellung durch Extrusion möglich, dass aufgrund der höheren Temperatur ein verstärkter Abbau der Polymere stattfindet. Durch diese störenden Einflüsse der vorliegenden Metalle bei der Herstellung werden Styrol enthaltende Schaumstoffe erhalten, welche nur ein ungenügendes Eigenschaftsprofil, beispielsweise bezüglich ihrer mechanischen Eigenschaften, aufweisen. Des Weiteren kann das Brandverhalten von flammgeschützten Polystyrol-Schaumstoffen in Gegenwart von Metallen im Schaumstoff in zu großen Mengen bei der Verwendung von Flammschutzmitteln negativ beeinflusst werden.

Aufgabe der vorliegenden Anmeldung ist es daher, flammgeschützte, expandierbare Styrolpolymerisate bereitzustellen, welche gegenüber den aus dem Stand der Technik bekannten expandierbaren Styrolpolymerisaten verbesserte Eigenschaften, insbesondere mechanische Eigenschaften oder flamminhibierende Wirkung, aufweisen. Insbesondere ist es eine Aufgabe der vorliegenden Erfindung, expandierbare Styrolpolymerisate bereitzustellen, die ein vorteilhaftes Brandverhalten zeigen, auch wenn athermane Partikel in den Styrolpolymerisaten vorliegen.

Diese Aufgaben werden gelöst durch ein expandierbares Styrolpolymerisat, enthaltend wenigstens ein Flammschutzmittel als Komponente (A), 0,01 bis 0,8 Gew.-%, bezogen auf Komponente (A), wenigstens eines Metalls als Komponente (B) und athermane Partikel als Komponente (C), wobei die athermanen Partikel Graphit sind.

In einer besonders bevorzugten Ausführungsform ist das Styrolpolymerisat ein Styrolhomopolymer oder ein Styrolcopolymer mit bis zu 40 Gew.-%, bezogen auf das Gewicht des Polymers, wenigstens eines weiteren ethylenisch ungesättigten Monomers ist, insbesondere Alkylstyrole, beispielsweise Divinylbenzol, para-Methyl-alpha-methylstyrol, alpha-Methylstyrol oder Acrylnitril, Butadien, Acrylsäureester oder Methacrylsäureester. Auch Blends aus Polystyrol mit anderen Polymeren, insbesondere mit Kautschuk und Polyphenylenether, sind möglich.

In einer besonders bevorzugten Ausführungsform ist das erfindungsgemäße expandierbare Styrolpolymerisat ausgewählt aus der Gruppe bestehend aus Styrolpolymeren, Schlagzähpolystyrol, anionisch polymerisiertem Schlagzähpolystyrol, Styrol-Acrylnitrilpolymerisaten (SAN), Acrylnitril-Butadien-Styrolpolymerisaten (ABS), Acrylnitril-Styrol-Acrylesterpolymerisaten (ASA), Methylacrylat-Butadien-Styrolpolymerisaten (MBS), Methylmethacrylat-Acrylnitril-Butadien-Styrolpolymerisaten (MABS), alpha-Methylstyrol-Acrylnitrilpolymerisaten (AMSAN), para-Methyl-alpha-methylstyrol-Acrylnitrilpolymerisaten (MAMSAN) und Mischungen davon. In einer bevorzugten Ausführungsform wird Polystyrol eingesetzt.

Es ist möglich, dass Mischungen von zwei oder mehr der genannten Styrolpolymerisate vorliegen. Die eingesetzten Polymere weisen im Allgemeinen ein gewichtsmittleres Molekulargewicht von 50000 bis 500000 g/mol, bevorzugt 70000 bis 400000 g/mol, auf.

Das erfindungsgemäße expandierbare Styrolpolymerisat enthält wenigstens ein Flammschutzmittel als Komponente (A). Bevorzugt ist das wenigstens eine Flammschutzmittel ausgewählt aus halogen- oder phosphorhaltigen Verbindungen oder Substanzen. Als Flammschutzmittel werden besonders bevorzugt organische Bromverbindungen eingesetzt. Die organischen Bromverbindungen sollen einen Bromgehalt von ≥ 40 Gew.-% aufweisen. Insbesondere geeignet sind aliphatische, cycloaliphatische und aromatische Bromverbindungen, wie Hexabromcyclododecan (HBCD), Pentabrommonochlorcyclohexan, Pentabromphenylallylether, 2,2',6,6'-Tetrabrombisphenol A-bisallylether, N-2,3-dibromopropyl-4,5-dibromohexahydrophthalimid und Mischungen davon.

Geeignete phosphorhaltige Verbindungen oder Substanzen sind beispielsweise Phosphate wie Trimethylphosphat, Triethylphosphat, Tributylphosphat, Tributoxyethylphosphat, Triphenylphosphat, Tricresylphosphat, Tris(chloroethyl)phosphat, Tris(dichloropropyl)phosphat, Tris(chloropropyl)phosphat oder Tris(2,3-dibromopropyl)phosphat, oder roter Phosphor.

Erfindungsgemäß können auch Mischungen der genannten Flammschutzmittel eingesetzt werden. In einer besonders bevorzugten Ausführungsform ist das wenigstens eine Flammschutzmittel Hexabromcyclododecan (HBCD).

Die Wirkung der bromhaltigen Flammschutzmittel wird durch Zusatz von C-C- oder O-O-labilen organischen Verbindungen erheblich verbessert. Beispiele solcher Flammschutzsynergisten sind Dicumyl und Dicumylperoxid. Eine bevorzugte Kombination enthält 0,1 bis 5 Gew.-%, bezogen auf das expandierbare Styrolpolymerisat, organische Bromverbindungen und 0,05 bis 1,0 Gew.-%, bezogen auf das expandierbare Styrolpolymerisat, der C-C- oder O-O-labilen organischen Verbindungen.

Das erfindungsgemäße expandierbare Styrolpolymerisat enthält 0,01 bis 0,8 Gew.-%, bevorzugt 0,02 bis 0,5 Gew.-%, jeweils bezogen auf Komponente (A), wenigstens eines Metalls als Komponente (B).

Das als Komponente (B) vorliegende wenigstens eine Metall kann in elementarer Form oder als Verbindung vorliegen. Die Mengenangabe bezieht sich dabei erfindungsgemäß immer auf das Metall in elementarer Form, beispielsweise bestimmt durch Elementaranalyse. Liegen mehrere Metalle in dem erfindungsgemäßen expandierbaren Styrolpolymerisat vor, beziehen sich die Mengenangaben auf die Summe der vorliegenden Metalle.

Die in dem erfindungsgemäßen expandierbaren Styrolpolymerisat vorliegenden Mengen an wenigstens einem Flammschutzmittel als Komponente (A) und wenigstens einem Metall als Komponente (B) resultieren in einem Gewichtsverhältnis von wenigstens einem Flammschutzmittel zu wenigstens einem Metall, welches im Allgemeinen größer 50, bevorzugt größer 100, besonders bevorzugt größer 125, ganz besonders bevorzugt größer 200, ist. In dem expandierbaren Styrolpolymerisat gemäß der vorliegenden Erfindung ist die Menge an vorliegendem wenigstens einen Flammschutzmittel an die Menge an vorliegendem Metall gekoppelt. Ist wenig Metall in dem erfindungsgemäßen Styrolpolymerisat vorhanden, kann auch die Menge an wenigstens einem Flammschutzmittel gering gewählt werden. Ist relativ viel Metall in dem erfindungsgemäßen Styrolpolymerisat vorhanden, so muss auch die Menge an wenigstens einem Flammschutzmittel entsprechend angepasst werden, so dass die erfindungsgemäßen Vorteile erzielt werden. In jedem Fall liegen in dem erfindungsgemäßen expandierbaren Styrolpolymerisat höchstens 0,8 Gew.-% Metall, bezogen auf Komponente (A), als Komponente (B) vor.

Es ist erfindungsgemäß bevorzugt, dass das wenigstens eine Metall nicht extra zu dem Styrolpolymerisat gegeben wird, sondern das gegebenenfalls vorliegende Metall gelangt im Allgemeinen als Verunreinigung in das erfindungsgemäße expandierbare Styrolpolymerisat. Beispielsweise gelangen Metalle durch den Abrieb von Stählen, beispielsweise aus dem Extruder, Kessel, Siebe etc., bei der Herstellung des expandierbaren Styrolpolymerisates, mechanisch und/oder durch Korrosion in das Produkt. Eine weitere Quelle des in dem erfindungsgemäßen expandierbaren Styrolpolymerisat gegebenenfalls vorliegenden Metalls sind die in die Reaktion zur Herstellung des Styrolpolymerisates eingebrachten Stoffe, beispielsweise die vorliegenden athermanen Partikel, beispielsweise Graphit oder Ruß.

Das in dem erfindungsgemäßen expandierbaren Styrolpolymerisat gegebenenfalls vorliegende wenigstens eine Metall ist bevorzugt ausgewählt aus der Gruppe bestehend aus Aluminium, Titan, Scandium, Vanadium, Chrom, Mangan, Eisen, Cobalt, Nickel, Kupfer, Yttrium, Zirconium, Niob, Molybdän, Ruthenium, Rhodium, Palladium, Silber, Hafnium, Tantal, Wolfram, Rhenium, Osmium, Iridium, Platin, Gold, Cer und Mischungen davon. In einer besonders bevorzugten Ausführungsform des erfindungsgemäßen Styrolpolymerisates ist das wenigstens eine Metall ausgewählt aus der Gruppe bestehend aus Eisen, Kupfer, Molybdän, Zirconium und Mischungen davon.

Durch die erfindungsgemäß sehr geringe Menge an wenigstens einem Metall, bezogen auf das wenigstens eine Flammschutzmittel, in dem Styrolpolymerisat zeichnet sich dieses durch sehr gute mechanische Eigenschaften, in Verbindung mit guter thermischer Isolierung und hohem Flammschutz aus. Der besonders gute Flammschutz der erfindungsgemäßen expandierbaren Styrolpolymerisate kann beispielsweise dadurch ausgedrückt werden, dass diese den Brandtest B2 nach DIN 4102 bestehen. Die Vorteile der erfindungsgemäßen expandierbaren Styrolpolymerisate ergeben diese vorteilhaften Eigenschaften auch in erfindungsgemäßen expandierten Styrolpolymerisaten bzw. Schaumstoffen, herstellbar aus diesen expandierbaren Styrolpolymerisaten.

Das erfindungsgemäße expandierbare Styrolpolymerisat enthält athermane Partikel als Komponente (C). In dem erfindungsgemäßen Styrolpolymerisat sind die athermanen Partikel Graphit.

In einer bevorzugten Ausführungsform enthalten die als athermane Partikel eingesetzten Graphite. Metalle in einer Menge von weniger als 5000 ppm, besonders bevorzugt weniger als 1000 ppm, ganz besonders bevorzugt weniger als 500 ppm, insbesondere bevorzugt weniger als 100 ppm.

Erfindungsgemäß einsetzbarer Graphit hat vorzugsweise eine mittlere Partikelgröße von 0,1 bis 50 µm, insbesondere von 1 bis 12 µm, eine Schüttdichte von 100 bis 800 g/l und eine spezifische Oberfläche von 1 bis 20 m²/g. Es kann Naturgraphit, synthetischer Graphit oder Blähgraphit eingesetzt werden. Das bevorzugt eingesetzte Graphit weist eine Asche, bestimmt nach DIN 51903 von im Allgemeinen 0 bis 15 Gew.-%, bevorzugt 0,005 bis 10 Gew.-%, besonders bevorzugt 0,01 bis 8 Gew.-%, auf.

Die athermanen Partikel liegen im Allgemeinen in dem erfindungsgemäßen expandierbaren Styrolpolymerisat in einer Menge von 0,05 bis 30 Gew.-%, besonders bevorzugt 0,1 bis 20 Gew.-%, jeweils bezogen auf das expandierbare Styrolpolymerisat, vor.

Die erfindungsgemäß als Komponente (C) einsetzbaren athermanen Partikel können regelmäßig und/oder unregelmäßig geformt sein. Die athermanen Partikel können nach allen dem Fachmann bekannten Verfahren hergestellt werden und/oder sind kommerziell erhältlich.

Die erfindungsgemäßen expandierbaren Styrolpolymerisate können des Weiteren die üblichen und dem Fachmann bekannten Hilfsmittel und Zusatzstoffe enthalten, beispielsweise Keimbildner, UV-Stabilisatoren, Kettenüberträger, Treibmittel, Weichmacher, Beschichtungsmittel, Hydrophobierungsmittel undloder Antioxidantien. Dabei ist erfindungsgemäß zu beachten, dass der Anteil an wenigstens einem Metall von 0,01 bis 0,8 Gew.-%, bezogen auf das wenigstens eine Flammschutzmittel, nicht überschritten wird. Das erfindungsgemäße expandierbare Styrolpolymerisat enthält in einer bevorzugten Ausführungsform keine Füllstoffe, insbesondere keine metallhaltigen Füllstoffe, d. h., dass die Menge an Füllstoffen, insbesondere an metallhaltigen Füllstoffen, in dem erfindungsgemäßen expandierbaren Styrolpolymerisat unterhalb der analytischen Nachweisgrenze liegt. Dem Fachmann sind geeignete analytische Verfahren bekannt.

Die vorliegende Erfindung betrifft auch ein Verfahren zur Herstellung des erfindungsgemäßen expandierbaren Styrolpolymerisates durch Mischen des expandierbaren Styrolpolymerisates, und des wenigstens einen Flammschutzmittels als Komponente (A) und der athermanen Partikel als Komponente (C), wobei 0,01 bis 0,8 Gew.-%, bezogen auf Komponente (A), wenigstens eines Metalls als Komponente (B) vorliegen.

Bevorzugt erfolgt das Vermischen des wenigstens einen Styrolpolymerisats mit wenigstens einem Flammschutzmittel, athermanen Partikeln und gegebenenfalls weiteren Komponenten nach den nachfolgend beschriebenen Verfahren.

Bei einer bevorzugten Ausführungsform vermischt man das wenigstens eine Flammschutzmittel, athermane Partikel und gegebenenfalls weitere Komponenten mit einer Schmelze des Styrolpolymerisats, beispielsweise in einem Extruder. Dabei wird der Schmelze gleichzeitig ein Treibmittel zudosiert. Man kann das wenigstens eine Flammschutzmittel, athermane Partikel und gegebenenfalls weitere Komponenten auch in eine Schmelze von treibmittelhaltigem Styrolpolymerisat einarbeiten, wobei zweckmäßigerweise ausgesiebte Randfraktionen eines Perlspektrums von bei einer Suspensionspolymerisation entstandenen treibmittelhaltigen Polystyrolperlen eingesetzt werden. Die Treibmittel, wenigstens ein Flammschutzmittel, athermane Partikel und gegebenenfalls weitere Komponenten enthaltende Polystyrolschmelze wird ausgepresst und zu treibmittelhaltigem Granulat zerkleinert. Da insbesondere Graphit stark nukleierend wirkt, sollte nach dem Auspressen unter Druck rasch abgekühlt werden, um ein Aufschäumen zu vermeiden. Man führt daher zweckmäßigerweise eine Unterwassergranulierung unter Druck durch. Wird die Polymerschmelze nicht unter Druck behandelt, so kommt es zu einem Aufschäumen des expandierbaren Styrolpolymerisats, wobei expandierte Styrolpolymerisat-Partikel oder ein Schaumstoff gebildet werden. In einer bevorzugten Ausführungsform geschieht dieses direkte Aufschäumen durch Auspressen der treibmittelhaltigen Schmelze durch eine entsprechende Düse, so dass direkt Schaumstoff-Platten in der gewünschten Größe aus dem expandierbaren Styrolpolymerisatgebildetwerden. In einer weiteren Ausführungsform wird die Schmelze durch eine andere geeignete Düse gepresst, so dass expandierte Partikel aus dem expandierbaren Styrolpolymerisat gebildet werden.

Die vorliegende Erfindung betrifft daher auch ein Verfahren zu Herstellung eines erfindungsgemäßen expandierten Styrolpolymerisat-Partikels, wobei ein erfindungsgemäßes expandierbares Styrolpolymerisat aufgeschäumt wird.

Die vorliegende Erfindung betrifft auch einen expandierten Styrolpolymerisat-Partikel, enthaltend wenigstens ein Flammschutzmittel als Komponente (A), 0,01 bis 0,8 Gew.- %, bezogen auf Komponente (A), wenigstens eines Metalls als Komponente (B) und athermane Partikel als Komponente (C), wobei die athermanen Partikel Graphit sind, bevorzugt herstellbar nach dem erfindungsgemäßen Verfahren. Bezüglich der einzelnen Merkmale und der bevorzugten Ausführungsformen gilt für die erfindungsgemäßen expandierten Styrolpolymerisat-Partikel das bezüglich der expandierbaren Styrolpolymerisat-Partikel Gesagte.

Es ist auch möglich, den Styrolpolymerisaten, die das wenigstens eine Flammschutzmittel, athermane Partikel und gegebenenfalls weitere Komponenten enthalten, das Treibmittel in einem gesonderten Verfahrensschritt zuzusetzen. Hierbei werden die Granulate vorzugsweise in wässriger Suspension mit dem Treibmittel imprägniert.

Das wenigstens eine Flammschutzmittel, athermane Partikel und gegebenenfalls weitere Komponenten können der Polymerschmelze direkt zugesetzt werden. Man kann das wenigstens eine Flammschutzmittel, athermane Partikel und gegebenenfalls weitere Komponenten auch in Form eines Konzentrats in dem entsprechenden Polystyrol, der Schmelze zusetzen. Bevorzugt werden aber Polystyrolgranulat, und das wenigstens eine Flammschutzmittel, athermane Partikel und gegebenenfalls weitere Komponenten zusammen in einen Extruder gegeben, das Polymer aufgeschmolzen und mit dem wenigstens einen Flammschutzmittel, athermanen Partikeln und gegebenenfalls weiteren Komponenten vermischt.

Es ist grundsätzlich auch möglich, das wenigstens eine Flammschutzmittel, athermane Partikel und gegebenenfalls weitere Komponenten bereits im Verlauf der Suspensionspolymerisation zu inkorporieren. Sie können hierbei vor der Suspendierung den Monomeren zugesetzt oder im Verlaufe, bevorzugt während der ersten Hälfte des Polymerisationscyclus, dem Reaktionsansatz zugefügt werden. Das Treibmittel wird bevorzugt im Verlaufe der Polymerisation zugegeben, es kann jedoch auch hinterher dem Polymerisat zugegeben werden. Für die Stabilität der Suspension ist es günstig, wenn bei Beginn der Suspensionspolymerisation eine Lösung von Polymer, bzw. einem entsprechenden Copolymerisat, in Monomer, bzw. der Mischung von Monomer und dem oder den entsprechenden Comonomeren, vorliegt. Bevorzugt geht man dabei von einer Lösung von Polystyrol in Styrol, wobei die Konzentration des Polystyrols in Styrol im Allgemeinen 0,5 bis 30 Gew.-%, bevorzugt 5 bis 20 Gew.-% beträgt, aus. Man kann dabei frisches Polystyrol in Styrol auflösen, zweckmäßigerweise setzt man aber so genannte Randfraktionen ein, die bei der Auftrennung des bei der Herstellung von expandierbarem Polystyrol, anfallenden Perlspektrums als zu große oder zu kleine Perlen ausgesiebt werden In der Praxis weisen derartige nicht verwendbare Randfraktionen Durchmesser von größer als 2,0 mm bzw. kleiner als 0,2 mm auf. Auch Polystyrol-Recyclat und Polystyrol-Schaumstoff-Recyclat können eingesetzt werden. Eine andere Möglichkeit besteht darin, dass man Styrol in Substanz bis zu einem Umsatz von 0,5 bis 70% vorpolymerisiert und das Vorpolymerisat zusammen mit den athermanen Partikeln in der wässrigen Phase suspendiert und auspolymerisiert.

Das Treibmittel wird in den üblichen Mengen von etwa 1 bis 10 Gew.-%, bezogen auf das Gewicht des thermoplastischen Polymeren, zugesetzt. Als Treibmittel werden üblicherweise aliphatische Kohlenwasserstoffe mit 3 bis 10, vorzugsweise 4 bis 6 Kohlenstoffatomen, beispielsweise n-Pentan, iso-Pentan oder Mischungen davon, eingesetzt.

Das erfindungsgemäße expandierbare Styrolpolymerisat kann zu Schaumstoffen mit Dichten von bevorzugt 5 bis 200 g/l, besonders bevorzugt von 8 bis 100 g/l und insbesondere von 10 bis 80 g/l, verarbeitet werden. Die vorliegende Erfindung betrifft daher auch einen Schaumstoff, herstellbar aus dem erfindungsgemäßen expandierbaren Styrolpolymerisat.

In einer bevorzugten Ausführungsform weist der erfindungsgemäße Schaumstoff eine Dichte von ≤ 35 g/l und eine Wärmeleitfähigkeit auf, die so weit erniedrigt ist, dass sie den Anforderungen der Wärmeleitklasse 035 (nach DIN 18164, Teil 1. Tab. 4) genügt. Die vorliegende Erfindung betrifft auch ein Verfahren zur Herstellung von Schaumstoffen durch Herstellen eines erfindungsgemäßen expandierbaren Styrolpolymerisates durch das erfindungsgemäße Verfahren und Aufschäumen dieses expandierbaren Styrolpolymerisates.

Die Verschäumung der Treibmittel enthaltenden expandierbaren Styrolpolymerisaten zu Schaumstoffen erfolgt üblicherweise ebenfalls nach dem im Stand der Technik bekannten Verfahren, indem sie in einem ersten Schritt mit Wasserdampf in offenen oder geschlossenen Vorschäumern zu den entsprechenden expandierten Styrolpolymerisaten vorgeschäumt werden. Die expandierten Partikel weisen im Allgemeinen eine mittlere Partikelgröße von 0,5 bis 10 mm, insbesondere von 1 bis 8 mm auf. Die vorliegende Erfindung betrifft auch die expandierten Styrolpolymerisate enthaltend das wenigstens eine Flammschutzmittel und gegebenenfalls weitere Komponenten. Die erfindungsgemäßen vorgeschäumten, expandierten Styrolpolymerisate in Form von Partikeln bzw. Perlen werden dann in einem zweiten Schritt in gasdurchlässigen Formen mittels Wasserdampf zu Formteilen oder Platten verschweißt.

Die vorliegende Erfindung betrifft auch die Verwendung des erfindungsgemäßen Schaumstoffes zur Wärmedämmung, beispielsweise von Gebäuden oder Gebäudeteilen, wie z. B. in der Perimeterdämmung. Dabei können die erfindungsgemäßen Schaumstoffe auf der Außen- als auch auf der Innenseite der zu dämmenden Teile aufgebracht werden.

Die vorliegende Erfindung betrifft auch die Verwendung des erfindungsgemäßen Schaumstoffes zur thermischen Isolierung von Maschinen und Haushaltsgeräten, beispielsweise Backöfen, Kühlschränken, Gefriertruhen, Warmwasserbereitern oder Isolierkannen.

Die vorliegende Erfindung betrifft auch die Verwendung des erfindungsgemäßen Schaumstoffes als Verpackungsmaterial. Dabei kann der Schaumstoff teilchenförmig verwendet werden, so dass der zu verpackende Gegenstand in einer losen Schüttung liegt. Es ist auch möglich, dass aus dem erfindungsgemäßen Schaumstoff ein einteiliges Werkstück hergestellt wird, in das der zu verpackende Gegenstand eingebettet wird.

### Beispiele

### Beispiel 1 (Vergleich):

in 3100 g Styrol werden 600 g EPS-Randfraktion gelöst und 110 g pulverförmiges Graphit (Korngröße d50: 4,5 µm; Schüttdichte 200 g/L; Asche, bestimmt nach DIN 51903: 3,5 Gew.-%) unter Beimischung von 2 g tert-Butylperoctoat und 17 g Dicumylperoxid sowie 35 g Hexabromcyclododecan (HBCD) homogen suspendiert. Die organische Phase wird in 4,5 L voll entsalztes Wasser in einen 10 L Rührkessel eingebracht. Die wässrige Phase enthält 18 g Natriumpyrophosphat und 17 g Magnesiumsulfat. Die Suspension wird in 150 Minuten auf 110 °C erhitzt. Dann werden 1 g Emulgator E30/40 (Leuna-Tenside GmbH) zugegeben. Nach weiteren 80 Minuten werden 220 g Pentan zudosiert und bei 134 °C auspolymerisiert. Nach dem Abtrennen der wässrigen Phase und anschließendem Sieben werden expandierbare Partikel erhalten. Der Metallgehalt, bezogen auf HBCD, beträgt 2,8 Gew.-%.

Die Partikel werden mit Wasserdampf vorgeschäumt und nach eintägiger Lagerung durch weitere Behandlung mit Wasserdampf in einer geschlossenen Form zu Schaumstoffblöcken mit einer Dichte von 15,1 g/L verschweißt. Die Wärmeleitfähigkeit nach DIN 52612 beträgt 31,5 mW/(m*K). Der B2-Test nach DIN 4102 wird nicht bestanden.

Die Druckspannung bei 10% Stauchung ist unzureichend und beträgt 50 kPa nach DIN EN 826.

### Beispiel 2 (erfindungsgemäß):

Der Versuch wird durchgeführt wie in Beispiel 1 beschrieben, aber es werden 110 g Graphit mit einer Korngröße d50 von 4,6 µm, einer Schüttdichte von 200 g/L und einem Aschegehalt, bestimmt nach DIN 51903, von 2 Gew.-% eingesetzt. Der Metallgehalt, bezogen auf HBCD, beträgt 0,2 Gew.-%. Die Wärmeleitfähigkeit bei einer Dichte von 15,3 g/L beträgt 31,3 mW/(m*K) nach DIN 52612. Der B2-Test nach DIN 4102 wird bestanden.

Die Druckspannung bei 10% Stauchung beträgt 75 kPa nach DIN EN 826.

### Beispiel 3 (Vergleich):

Zu einem Hauptstrom einer treibmittelhaltigen Polymerschmelze bestehend aus Polystyrol mit einem gewichtsmittleren Molekulargewicht von 280000 g/mol, 3,7 Gew.-%, bezogen auf Polystyrol, Graphit (Korngröße 4,7 µm; Schüttdichte 200 g/L; Asche, bestimmt nach DIN 51903: 3,7 Gew.-%) und 7 Gew.-%, bezogen auf Polystyrol, n-Pentan werden in einem Extruder 2,0 Gew.-%, bezogen auf Polystyrol, Hexabromcyclododekan (HBCD), und 0,4 Gew.-%, bezogen auf Polystyrol, Dicumyl zudosiert. Die resultierende Polymerschmelze wird durch eine Düsenplatte gefördert und mit Hilfe einer druckbeaufschlagten Unterwassergranulierung zu expandierbaren Partikeln granuliert.

Es werden Partikel mit einem mittleren Durchmesser von 1,1 mm erhalten. Der Metallgehalt, bezogen auf HBCD, beträgt 2,1 Gew.-%. Die Partikel werden mit Wasserdampf vorgeschäumt und nach eintägiger Lagerung durch weitere Behandlung mit Wasserdampf in einer geschlossenen Form zu Schaumstoffblöcken mit einer Dichte von 16,1 g/L verschweißt. Die Wärmeleitfähigkeit nach DIN 52612 beträgt 31,0 mW/(m*K). Der B2-Test nach DIN 4102 wird nicht bestanden. Die Druckspannung bei 10% Stauchung ist unzureichend und beträgt 60 kPa nach DIN EN 826.

### Beispiel 4 (erfindungsgemäß)

Der Versuch wird durchgeführt wie in Beispiel 3 beschrieben, aber es wird Graphit mit einer Korngröße d50 von 4,5 µm, einer Schüttdichte von 200 g/L und einem Aschegehalt, bestimmt nach DIN 51903, von 0,5 Gew.-% eingesetzt. Der Metallgehalt, bezogen auf HBCD, beträgt 0,02 Gew.-%. Die Wärmeleitfähigkeit bei einer Dichte von 16,2 g/L beträgt 31,0 mW/(m*K) nach DIN 52612. Der B2-Test nach DIN 4102 wird bestanden. Die Druckspannung bei 10% Stauchung beträgt 85 kPa nach DIN EN 826.

### Beispiel 5 (erfindungsgemäß)

Der Versuch wird durchgeführt wie in Beispiel 3 beschrieben, aber es wird Graphit mit einer Korngröße d50 von 7 µm, einer Schüttdichte von 300 g/L und einem Aschegehalt, bestimmt nach DIN 51903, von 3,5 Gew.-% eingesetzt. Der Metallgehalt, bezogen auf HBCD, beträgt 0,5 Gew.-%. Die Wärmeleitfähigkeit bei einer Dichte von 16,5 g/L beträgt 32,8 mW/(m*K) nach DIN 52612. Der B2-Test nach DIN 4102 wird bestanden. Die Druckspannung bei 10% Stauchung beträgt 83 kPa nach DIN EN 826.

## Patentansprüche

1. Expandierbares Styrolpolymerisat, enthaltend wenigstens ein Flammschutzmittel als Komponente (A), 0,01 bis 0,8 Gew.-%, bezogen auf Komponente (A), wenigstens eines Metalls als Komponente (B) und athermane Partikel als Komponente (C), wobei die athermanen Partikel Graphit sind.

2. Styrolpolymerisat nach Anspruch 1, **dadurch gekennzeichnet, dass** es ein Styrolhomopolymer oder ein Styrolcopolymer mit bis zu 40 Gew.-%, bezogen auf das Gewicht des Polymers, wenigstens eines weiteren ethylenisch ungesättigten Monomers ist.

3. Styrolpolymerisat nach Anspruch 1 oder 2, **dadurch gekennzeichnet, dass** das wenigstens eine Flammschutzmittel eine organische Bromverbindung ist.

4. Styrolpolymerisat nach einem der Ansprüche 1 bis 3, **dadurch gekennzeichnet, dass** das wenigstens eine Metall ausgewählt ist aus der Gruppe bestehend aus Eisen, Kupfer, Molybdän, Zirconium und Mischungen davon.

5. Styrolpolymerisat nach einem der Ansprüche 1 bis 4, **dadurch gekennzeichnet, dass** das wenigstens eine Flammschutzmittel Hexabromcyclododecan (HBCD) ist.

6. Verfahren zur Herstellung des expandierbaren Styrolpolymerisates nach einem der Ansprüche 1 bis 5 durch Mischen des expandierbaren Styrolpolymerisates, des wenigstens einen Flammschutzmittels als Komponente (A) und der athermane Partikel als Komponente (C), wobei 0,01 bis 0,8 Gew.-%, bezogen auf Komponente (A), wenigstens eines Metalls als Komponente (B) vorliegen.

7. Expandierter Styrolpolymerisat-Partikel, enthaltend wenigstens ein Flammschutzmittel als Komponente (A), 0,01 bis 0,8 Gew.-%, bezogen auf Komponente (A), wenigstens eines Metalls als Komponente (B) und athermane Partikel als Komponente (C), wobei die athermanen Partikel Graphit sind.

8. Verfahren zur Herstellung eines expandierten Styrolpolymerisat-Partikels nach Anspruch 7, **dadurch gekennzeichnet, dass** ein expandierbares Styrolpolymerisat nach einem der Ansprüche 1 bis 5 aufgeschäumt wird.

9. Schaumstoff, herstellbar aus dem expandierbaren Styrolpolymerisat nach einem der Ansprüche 1 bis 5.

10. Schaumstoff nach Anspruch 9, **dadurch gekennzeichnet, dass** dieser eine Dichte von ≤ 35 g/l und eine Wärmeleitfähigkeit aufweist, die so weit erniedrigt ist, dass sie den Anforderungen der Wärmeleitklasse 035 (nach DIN 18164, Teil 1. Tab. 4) genügt.

11. Verfahren zur Herstellung eines Schaumstoffs nach Anspruch 9 durch Herstellen eines expandierbaren Styrolpolymerisates nach Anspruch 6 und Aufschäumen dieses expandierbaren Styrolpolymerisates.

12. Verwendung eines Schaumstoffes nach Anspruch 9 zur Wärmedämmung, zur thermischen Isolierung von Maschinen und Haushaltsgeräten und als Verpackungsmaterial.

## Claims

1. An expandable styrene polymer, comprising at least one flame retardant as component (A), from 0.01 to 0.8% by weight, based on component (A), of at least one metal as component (B), and athermanous particles as component (C), wherein the athermanous particles are graphite.

2. The styrene polymer according to claim 1, which is a styrene homopolymer or a styrene copolymer having up to 40% by weight, based on the weight of the polymer, of at least one further ethylenically unsaturated monomer.

3. The styrene polymer according to claim 1 or 2, wherein the at least one flame retardant is an organic bromine compound.

4. The styrene polymer according to any of claims 1 to 3, wherein the at least one metal has been selected from the group consisting of iron, copper, molybdenum, zirconium, and mixtures thereof.

5. The styrene polymer according to any of claims 1 to 4, wherein the at least one flame retardant is hexabromocyclododecane (HBCD).

6. A process for the production of the expandable styrene polymer according to any of claims 1 to 5, via mixing of the expandable styrene polymer, of the at least one flame retardant as component (A), and of the athermanous particles as component (C), where from 0.01 to 0.8% by weight, based on component (A), of at least one metal is present as component (B).

7. An expanded styrene polymer bead, comprising at least one flame retardant as component (A), from 0.01 to 0.8% by weight, based on component (A), of at least one metal as component (B), and athermanous particles as component (C), wherein the athermanous particles are graphite.

8. A process for the production of an expanded styrene polymer bead according to claim 7, which comprises foaming an expandable styrene polymer according to any of claims 1 to 5

9. A foam, capable of production from the expandable styrene polymer according to any of claims 1 to 5.

10. The foam according to claim 9, whose density is ≤ 35 g/l, and whose thermal conductivity has been lowered to the extent that it complies with the requirements of thermal conductivity class 035 (to DIN 18164, part 1, table 4).

11. A process for the production of a foam according to claim 9, via production of an expandable styrene polymer according to claim 6 and foaming of this expandable styrene polymer.

12. The use of a foam according to claim 9 for thermal insulation, including that of machines and of household devices, and as packaging material.

## Revendications

1. Polymérisat de styrène expansible, contenant au moins un retardateur de flamme en tant que composant (A), 0,01 a 0,8 % en poids, par rapport au composant (A), d'au moins un métal en tant que composant (B) et des particules athermanes en tant que composant (C), les particules athermanes étant du graphite

2. Polymérisat de styrène selon la revendication 1, **caractérisé en ce qu'**il est un homopol-ymère de styrène ou un copolymère de styrène avec jusqu'a 40 % en poids, par rapport au poids du polymère, d'au moins un autre monomère a insaturation éthylénique.

3. Polymérisat de styrène selon la revendication 1 ou 2, **caractérisé en ce que** ledit au moins un retardateur de flamme est un composé brome organique.

4. Polymérisat de styrène selon l'une quelconque des revendications 1 a 3, **caractérisé en ce que** ledit au moins un métal est choisi dans le groupe constitué par le fer, le cuivre, le molybdène, le zirconium et des mélanges de ceux-ci.

5. Polymérisat de styrène selon l'une quelconque des revendications 1 a 4, **caractérisé en ce que** ledit au moins un retardateur de flamme est l'hexabromocyclododécane (HBCD).

6. Procédé pour la préparation du polymérisat de styrène expansible selon l'une quelconque des revendications 1 a 5, par mélange du polymérisat de styrène expansible, dudit au moins un retardateur de flamme en tant que composant (A) et des particules athermanes en tant que composant (C), 0,01 a 0,8 % en poids, par rapport au composant (A), d'au moins un métal étant présent en tant que composant (B).

7. Particule de polymérisat de styrène expansé, contenant au moins un retardateur de flamme en tant que composant (A), 0,01 a 0,8 % en poids, par rapport au composant (A), d'au moins un métal en tant que composant (B) et des particules athermanes en tant que composant (C), les particles athermanes étant du graphite.

8. Procédé pour la production d'une particule de polymérisat de styrène expansé selon la revendication 7, **caractérisé en ce qu'**on transforme en mousse un polymérisat de styrène expansible selon l'une quelconque des revendications 1 a 5.

9. Mousse, pouvant être produite a partir du polymérisat de styrène expansible selon l'une quelconque des revendications 1 a 5.

10. Mousse selon la revendication 9, **caractérisée en ce qu'**elle présente une densité de ≤ 35 g/l et une conductivité thermique qui est suffisamment réduite pour satisfaire aux exigences de la classe de conductivité thermique 035 (selon DIN 18164, section 1, Tab. 4).

11. Procédé pour la production d'une mousse selon la revendication 9, par production d'un polymérisat de styrène expansible selon la revendication 6 et transformation en mousse de ce polymérisat de styrène expansible.

12. Utilisation d'une mousse selon la revendication 9, pour le calorifugeage, pour l'isolation thermique de machines et d'appareils ménagers et comme matériau d'emballage.
